# EUROPÄISCHE PATENTSCHRIFT

(11) **EP 1 429 017 B1**
(45) Veröffentlichungstag und Bekanntmachung des Hinweises auf die Patenterteilung: **02.02.2011**
(21) Anmeldenummer: 03026547.4
(22) Anmeldetag: 18.11.2003
(51) Int. Cl.: F02M 31/13

(54) **Heizflansch**
Heating flange
Bride d'échauffement

(30) Priorität: 11.12.2002 DE 10257921
(43) Veröffentlichungstag der Anmeldung: 16.06.2004
(73) Patentinhaber: Beru AG, 71636 Ludwigsburg (DE)
(72) Erfinder: Geiger, Steffen, 71679 Asperg (DE); Giffels, Thomas, 70469 Stuttgart (DE); Eller, Martin, 71640 Ludwigsburg (DE)
(74) Vertreter: Kilian, Helmut

(56) Entgegenhaltungen:
- WO-A-00/34643
- US-A- 4 685 437
- US-A- 6 073 615

## Beschreibung

Die Erfindung betrifft einen Heizflansch insbesondere zum Vorwärmen der Ansaugluft einer Brennkraftmaschine mit einem Rahmen, einem im Rahmen an einer Rahmeninnenseite gehaltenen Stützkeramikelement mit daran angebrachtem Heizband und einer zwischen dem Stützkeramikelement und der Rahmeninnenseite angeordneten Stützfeder.

Heizflansche dieser Art sind mit geschlossenem Rahmen und mit oder ohne Deckel bekannt und mit einer vorgeformten Stützfeder versehen, wobei das Stützkeramikelement und die Stützfeder in einer Fassung gehalten sind, die an der Rahmeninnenseite angebracht ist. Ein Beispiel für einen solchen Heizflansch ist in US-607 3 615 gegeben.

Ein derartiger Heizflansch ist insofern nachteilig, als durch eine Schwingbelastung Ausfälle aufgrund der Reibung zwischen dem Keramikstützelement und dem Heizband einerseits und zwischen dem Keramikstützelement und der Stützfeder andererseits auftreten können. Weiterhin ist es als nachteilig anzusehen, dass aufgrund der Vorformung der Stützfeder die Kraft der Federabstützung nicht definiert ist und dass das Stützkeramikelement mit der Stützfeder in einer Fassung gehalten ist, was eine Vielzahl von Bauteilen bedeutet.

Die der Erfindung zugrundeliegende Aufgabe besteht daher darin, einen Heizflansch der eingangs genannten Art zu schaffen, der fehlerfrei arbeitet und bei dem insbesondere die Reibung zwischen dem Stützkeramikelement und dem Heizband einerseits und dem Stützkeramikelement und der Stützfeder andererseits verringert ist.

Diese Aufgabe wird gemäß der Erfindung dadurch gelöst, dass die Stützfeder eine im nicht gespannten Zustand gerade, nicht vorgeformte Blattfeder ist, die unter einer Vorspannung zwischen dem Stützkeramikelement und der Rahmeninnenseite angeordnet ist.

Neben der verringerten Reibung zwischen dem Stützkeramikelement und dem Heizband sowie der Stützfeder ergeben sich bei dem erfindungsgemäßen Heizflansch eine definierte Federvorspannung und ein definierter Federweg.

Besonders bevorzugte Ausbildungen und Weiterbildungen des erfindungsgemäßen Heizflansches sind Gegenstand der Ansprüche 2 bis 10.

Im Folgenden werden anhand der zugehörigen Zeichnung besonders bevorzugte Ausführungsbeispiele der Erfindung näher beschrieben. Es zeigen
Fig. 1/1 und Fig. 1/2 in perspektivischen Ansichten ein Stützkeramikelement mit nicht montierter und montierter Blattfeder,
Fig. 2 in einer perspektivischen Ansicht ein Stützkeramikelement mit zwei Stützfedern,
Fig. 3 in einer Schnittansicht, wie eine im entspannten Zustand gerade Blattfeder unter einer Vorspannung beim erfindungsgemäßen Heizflansch angeordnet ist,
Fig. 4 in einer Schnittansicht eine gewölbte Blattfeder mit Federlängenausgleich,
Fig. 5 in einer Schnittansicht einen Teil des Rahmens eines Ausführungsbeispiels des erfindungsgemäßen Heizflansches mit darin gehaltenem Stützkeramikelement,
Fig. 6 in einer Fig. 5 entsprechenden Schnittansicht ein abgewandeltes Ausführungsbeispiel der Halterung für das Stützkeramikelement und
Fig. 7 in einer Schnittansicht den Rahmen eines bekannten Heizflansches mit darin angeordnetem Stützkeramikelement.

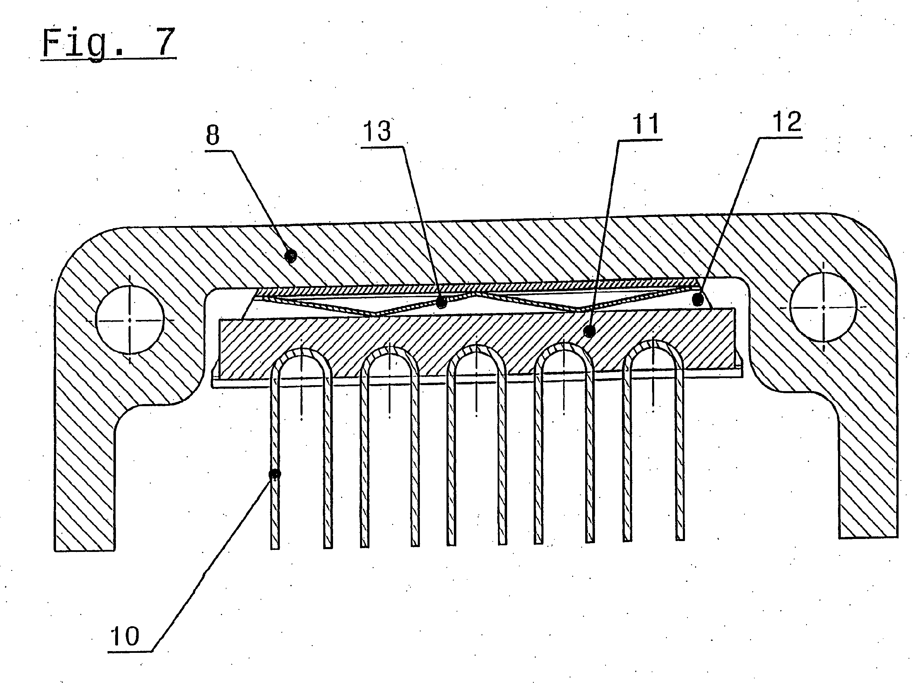

Wie es in Fig. 7 dargestellt ist, umfasst ein üblicher Heizflansch einen Rahmen 8 an dessen einer Innenseite ein Stützkeramikelement 11 mit daran gehaltenem Heizband 10 angeordnet ist. Zwischen dem Stützkeramikelement 11 und dem Rahmen 8 befindet sich eine vorgeformte Stützfeder 13, wobei das Stützkeramikelement 11 und die Stützfeder 13 in einer Fassung 12 gehalten sind, die an der Innenseite des Rahmens 8 angeordnet ist.

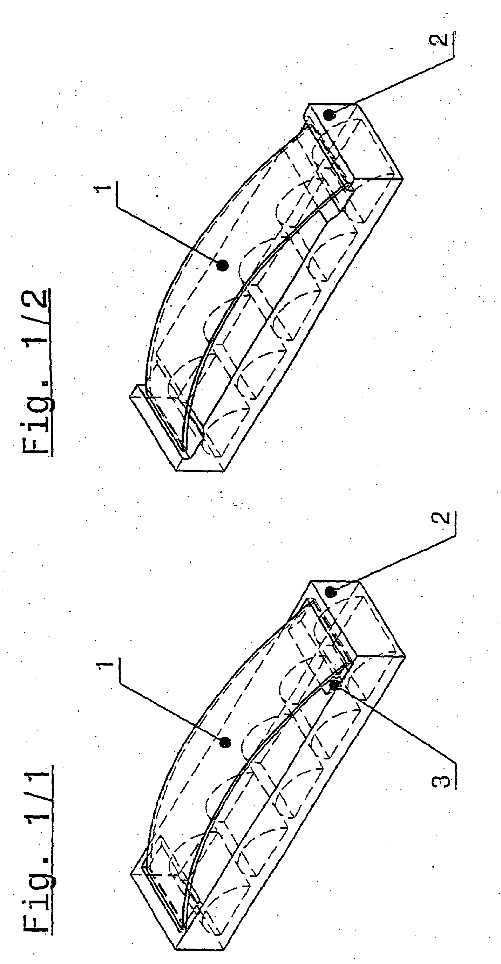

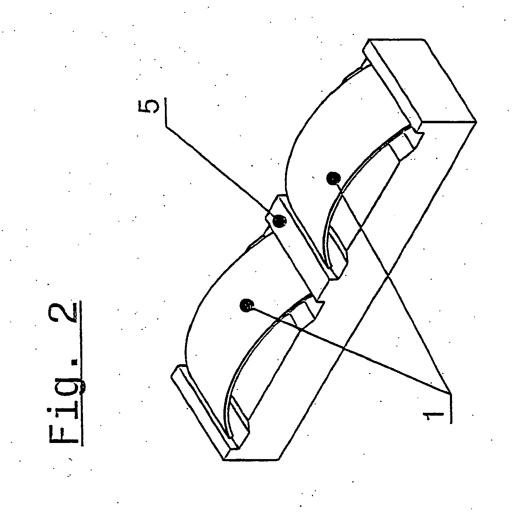

Abweichend von dem in Fig. 7 dargestellten üblichen Heizflansch ist gemäß der Erfindung bei dem in den Figuren 1/1 und 1/2 dargestellten Ausführungsbeispiel des erfindungsgemäßen Heizflansches eine im entspannten Zustand gerade Blattfeder 1 vorgesehen, die unter einer Vorspannung zwischen dem Stützkeramikelement 2 und der Rahmeninnenseite angeordnet ist.

In Fig. 1/1 ist eine Ausbildung dargestellt, bei der die Blattfeder 1 im Stützkeramikelement 2 vormontiert ist und zusätzliche seitliche Stege 3 zur seitlichen Abstützung der Blattfeder 1 vorgesehen sind.

Bei dem Fig. 1/2 dargestellten Ausführungsbeispiel ist die Blattfeder 1 in dem Stützkeramikelement 2 dadurch vormontiert, dass in diesem Rillen vorgesehen sind, in die die Enden der Blattfeder 1 eingesetzt sind.

Es ist gleichfalls möglich, derartige Rillen zusammen mit zusätzlichen Stegen 3 zur Fixierung der Blattfeder 1 vorzusehen.

Aus den Fig. 1/1 und 1/2 ist weiterhin erkennbar, dass auf der der Blattfeder 1 abgewandten Seite des Stützkeramikelementes 2 Ausbuchtungen vorgesehen sind, die zur Aufnahme eines Heizbandes dienen.

In Fig. 2 ist ein Ausführungsbeispiel dargestellt, bei dem in Längsrichtung des Stützkeramikelementes 2 zwei Blattfedern 1 hintereinander angeordnet sind, die durch einen zusätzlichen Steg 5 voneinander getrennt sind, der in der Mitte in Längsrichtung des Stützkeramikelements 2 ausgebildet ist. Die Ausbildung der Blattfedern 1 und ihre Halterung am Stützkeramikelement 2 entspricht im Übrigen den Ausführungsbeispielen von Fig. 1/1 und Fig. 1/2.

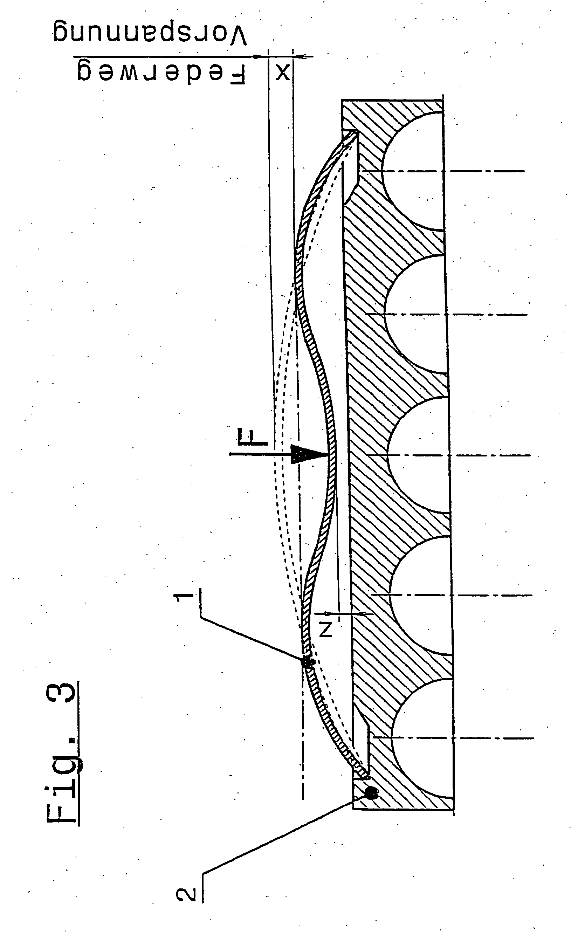

In Fig. 3 ist die vorgespannte Form der Blattfeder 1 bei einem bevorzugten Ausführungsbeispiel der Erfindung dargestellt. Diese Form der Blattfeder 1 ist im Längsschnitt wellenförmig mit zwei Wellenbergen und einem Wellental, wobei der durch die Montagekraft F erzeugte Federweg gleich X ist und das Wellental eine Abstand Z von der Oberfläche des Stützkeramikelements 2 hat. Bei diesem Ausführungsbeispiel ergibt sich ein definierter Weg X und stellt sich die Stützfeder 1 bei der Belastung F bauchig so ein, dass sie an zwei Stellen, nämlich den Wellenbergen, trägt.

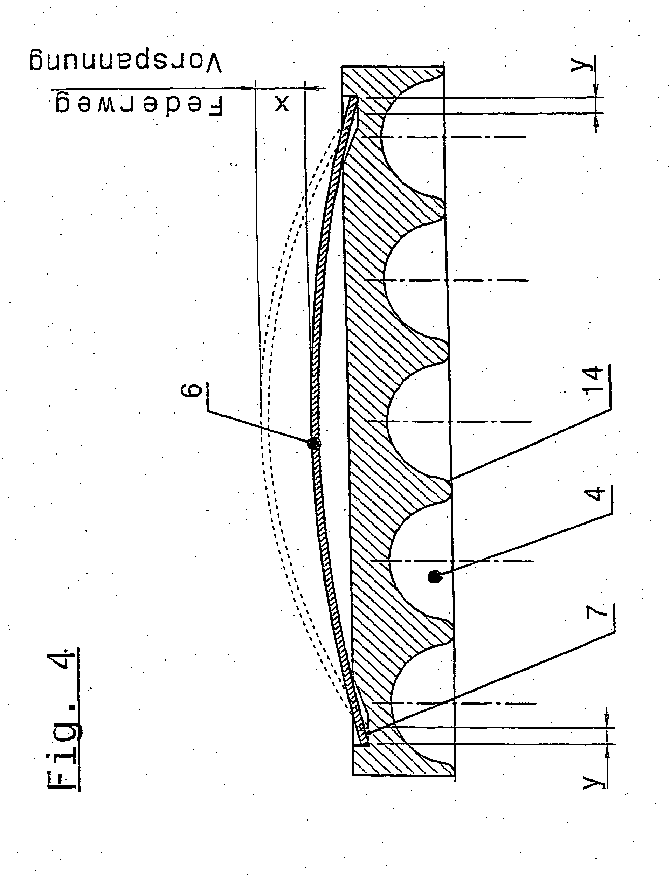

Fig. 4 zeigt ein Ausführungsbeispiel, bei dem die gespannte Blattfeder 6 eine gebogene oder gewölbte Form hat, wobei der bei der Montage und damit der Belastung notwendige Ausgleichsweg 7 im Stützkeramikelement vorgesehen ist und ein Federweg Y für die Blattfeder 6 mit Längenausgleich besteht. Durch diesen Ausgleichsweg 7 ergibt sich ein zusätzlicher Federweg Y, wie es aus Fig. 4 erkennbar ist.

Bei dem in Fig. 4 dargestellten Ausführungsbeispiel sind die an der der Feder 6 gegenüberliegenden Seite des Stützkeramikelements ausgebildeten Ausbuchtungen für das Heizband 4 so ausgebildet, dass die zwischen den Ausbuchtungen gebildeten Zwischenwände an ihrer Stirnseite abgerundet sind, und somit einen Auslaufradius 14 bilden, so dass bei durch Vibrationen entstehenden Bewegungen das Heizband 4 nicht durchgescheuert wird.

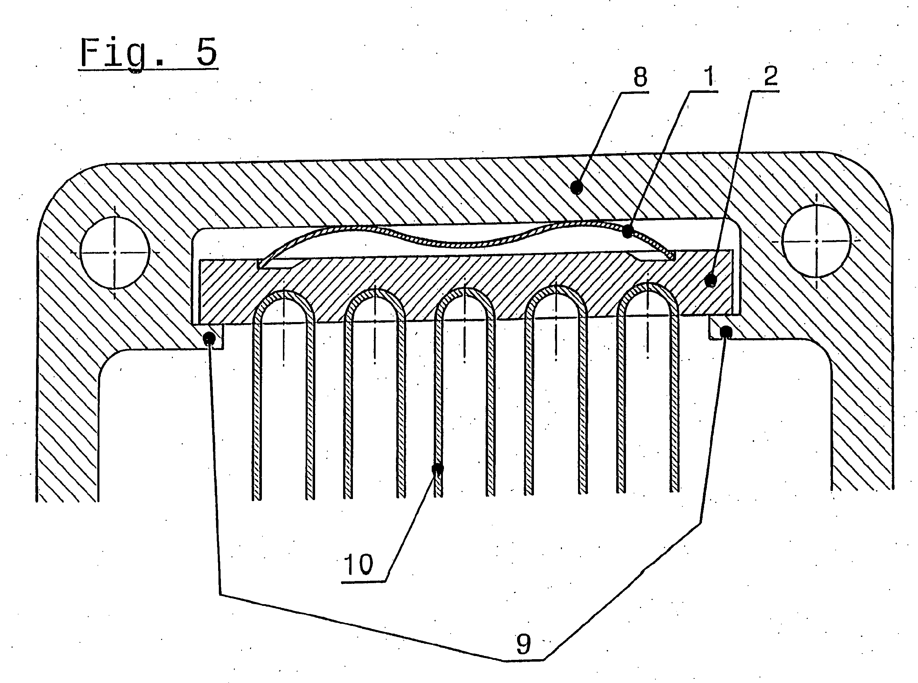

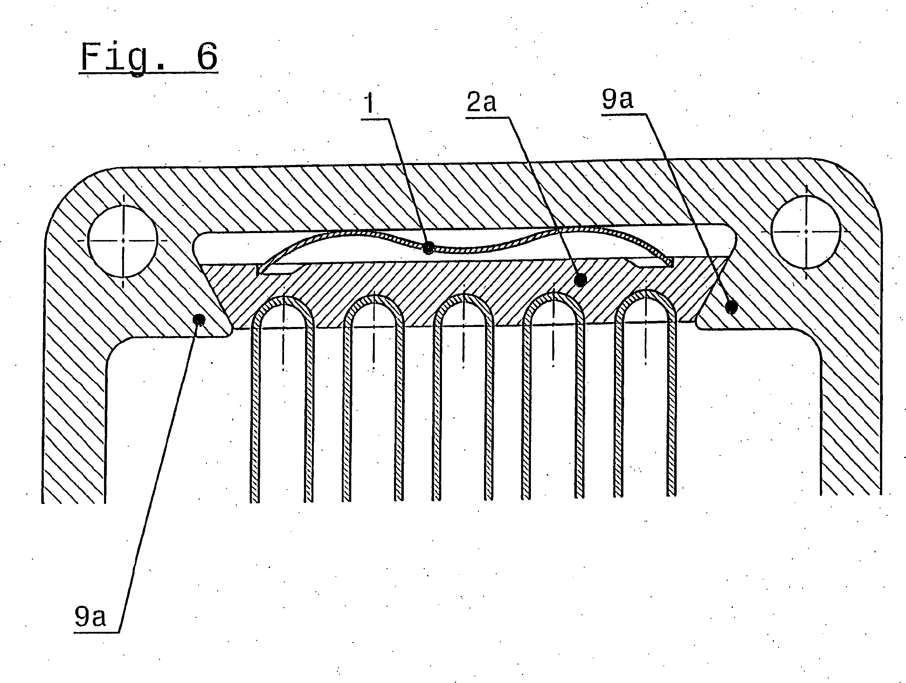

In den Fig. 5 und 6 sind jeweils zwei Möglichkeiten der Halterung des Stützkeramikelements 2 an der Rahmeninnenseite dargestellt. Bei dem in Fig. 5 dargestellten Ausführungsbeispiel sind Haltestege 9 an den Rahmen 8 angeformt und ist das Stützkeramikelement 2 zwischen den Haltestegen 9 und der Rahmeninnenseite angeordnet. In dieser Weise ist der Weg des Stützkeramikelements 2 durch die Haltestege 9 begrenzt.

Bei dem in Fig. 6 dargestellten Ausführungsbeispiel sind die Haltestege 9a abgeschrägt so ausgebildet, dass sie von der Rahmeninnenseite schräg nach innen verlaufen und weist das Stützkeramikelement 2a dazu komplementär geformte abgeschrägte Stirnflächen auf.

Eine Fassung zum Halten des Stützkeramikelements und der Stützfeder, wie sie bei üblichen Heizflanschen vorgesehen ist, entfällt dadurch.

Die Blattfeder 1 oder 6 kann je nach Vorspannkraft F eine Dicke zwischen 0,1 und 0,6 mm haben. Sie kann insbesondere so gewählt sein, dass bis zu einer Temperatur von wenigstens 250°C kein Verlust an Federspannung auftritt, was beispielsweise bei der Verwendung eines Materials wie Stahl 1.4310 erreicht werden kann.

Aus dem Obigen ist ersichtlich, dass bei dem erfindungsgemäßen Heizflansch die Blattfeder ohne Fassung vormontiert werden kann und nicht vorgeformt ist. Dadurch wird eine Reibung zwischen einem Metallelement und einem Keramikelement vermieden. Durch die Verwendung einer nicht vorgeformten Feder ergibt sich darüber hinaus eine genauer definierte Federkraft.

## Patentansprüche

1. Heizflansch insbesondere zum Vorwärmen der Ansaugluft einer Brennkraftmaschine mit
- einem Rahmen (8),
- einem im Rahmen an einer Rahmeninnenseite gehaltenes Stützkeramikelement (11) mit daran angeordnetem Heizband (110) und
- einer zwischen den Stützkeramikelement und der Rahmeninnenseite angeordneten Stützfeder (13),
**dadurch gekennzeichnet, dass**
- die Stützfeder eine im nicht gespannten Zustand gerade, nicht vorgeformte Blattfeder (1) ist, die unter Vorspannung zwischen dem Stützkeramikelement (11) und der Rahmeninnenseite angeordnet ist.

2. Heizflansch nach Anspruch 1, **gekennzeichnet durch** Aufnahmerillen im Stützkeramikelement, in denen die Blattfederenden sitzen.

3. Heizflansch nach Anspruch 1 oder 2 **gekennzeichnet durch** am Stützkeramikelement ausgebildete Stege zum Festlegen der Blattfeder.

4. Heizflansch nach einem der vorhergehenden Ansprüche, **dadurch gekennzeichnet, dass** auf der der Blattfeder gegenüberliegenden Seite des Stützkeramikelementes Ausbuchtungen vorgesehen sind, in denen Teile des Heizbandes aufgenommen sind.

5. Heizflansch nach Anspruch 4, **dadurch gekennzeichnet, dass** die Wände zwischen den Ausbuchtungen im Stützkeramikelement an ihrer Stirnseite abgerundet sind.

6. Heizflansch nach einem der vorhergehenden Ansprüche, **dadurch gekennzeichnet, dass** wenigstens zwei Blattfedern in Längsrichtung des Stützkeramikelementes hintereinander vorgesehen sind, die durch einen Zwischensteg am Stützkeramikelement voneinander getrennt sind.

7. Heizflansch nach einem der vorhergehenden Ansprüche, **dadurch gekennzeichnet, dass** die Blattfeder im vorgespannten Zustand gewölbt ist und im Stützkeramikelement ein Ausgleichsweg für den Längenausgleich bei der Spannung der Blattfeder während der Montage vorgesehen ist.

8. Heizflansch nach einem der Ansprüche 1 bis 6, **dadurch gekennzeichnet, dass** die Vorspannung der Blattfeder derart ist, dass diese im Längsschnitt eine Wellenform mit zwei Wellenbergen hat.

9. Heizflansch nach einem der vorhergehenden Ansprüche, **dadurch gekennzeichnet, dass** am Rahmen seitliche Rahmenstege angeformt sind, und das Stützkeramikelement zwischen den Rahmenstegen und der Rahmeninnenseite angeordnet ist.

10. Heizflansch nach Anspruch 9, **dadurch gekennzeichnet, dass** die Rahmenstege von der Rahmeninnenwand schräg nach innen verlaufen und das Stützkeramikelement komplementär dazu ausgebildete Stirnseiten hat.

## Claims

1. A. heating flange, in particular for preheating the intake air of a combustion engine having
- a frame (8)
- a supporting ceramics element (11) having a heating filament (110) disposed thereon and being retained in the frame at an inner side of the frame, and
- a support spring (13) arranged between the supporting ceramics clement and the inner side of the frame,
**characterised in that**
- the support spring is a leaf spring (1) that is not preformed and is straight in its unbiased state, and is arranged under bias between the supporting ceramics element (11) and the inner side of the frame.

2. A heating flange according to claim 1, **characterised by** receiving grooves in the supporting ceramics element, in which the leaf spring ends rest.

3. A heating flange according to claim 1 or 2, **characterised by** bars formed on the supporting ceramics element for locating the leaf spring.

4. A heating flange according to any one of the preceding claims, **characterised in that** recesses in which parts of the heating filament are accommodated are provided on the side of the supporting ceramics element furthest from the leaf spring.

5. A heating flange according to claim 4, **characterised in that** the walls between the recesses in the supporting ceramics element are rounded off at their front face.

6. A heating flange according to any one of the preceding claims, **characterised in that** at least two leaf springs are provided one behind the other in the longitudinal direction of the supporting ceramics clement and are separated from one another by an intermediate bar on the supporting ceramics element.

7. A heating flange according to any one of the preceding claims, **characterised in that** the leaf spring is bowed in its biased state and a compensation path is provided for length compensation when the leaf spring is tensioned during assembly.

8. A heating flange according to any one of claims 1 to 6, **characterised in that** the bias of the leaf spring is such that in longitudinal section this has an undulating form with two wave peaks.

9. A heating flange according to any one of the preceding claims, **characterised in that** lateral frame bars are moulded onto the frame, and the supporting ceramics element is arranged between the frame bars and the inner side of the frame.

10. A heating flange according to claim 9, **characterised in that** the frame bars run obliquely inwards from the inner wall of the frame and the supporting ceramics element has end faces complementary thereto.

## Revendications

1. Bride de chauffage plus particulièrement destinée en particulier au préchauffage de l'air d'admission d'un moteur à combustion interne, avec :
cadre (8),
un élément d'appui en céramique (11) maintenu dans le cadre contre un côté intérieur du cadre, avec une bande chauffante (10) disposée contre celui-ci, et
un ressort d'appui (13) disposé entre l'élément d'appui en céramique et le côté intérieur du cadre,
**caractérisée en ce que** le ressort d'appui est und ressort à lame (1) droit non préformé lorsqu'il n'est pas en état de tension, et qui, en état de pré-contrainte, est disposé entre l'élément d'appui en céramique (11) et le côté intérieur du cadre.

2. Bride de chauffage selon la revendication 1, **caractérisée par** des rainures de réception dans l'élément d'appui en céramique, où sont logées les extrémités du ressort à lame.

3. Bride de chauffage selon la revendication 1 ou la revendication 2, **caractérisée par** des méplats prévus sur l'élément d'appui en céramique pour la fixation du ressort à lame.

4. Bride, de chauffage selon l'une des revendications précédentes, **caractérisée en ce que** des évidements sont prévus sur le côté de l'élément d'appui en céramique opposé au ressort à lame, où sont logées des parties de la bande chauffante.

5. Bride de chauffage selon la revendication 4, **caractérisée en ce que** les parois entre les évidements de l'élément d'appui en céramique sont arrondies sur leur face frontale.

6. Bride de chauffage selon l'une des revendications précédentes, **caractérisée en ce qu'**au moins deux ressorts à lame sont prévus l'un derrière l'autre dans le sens de la longueur de l'élément d'appui en céramique, est séparés l'un de l'autre par un méplat intercalaire sur l'élément d'appui en céramique.

7. Bride de chauffage selon l'une des revendications précédentes, **caractérisée en ce que** le ressort à lame est bombé en état de pré-contrainte et **en ce qu'**une course de compensation est prévue dans l'élément d'appui en céramique, pour la compensation de longueur lors de la tension du ressort à lame en cours de montage.

8. Bride de chauffage selon l'une des revendications 1 à 6, **caractérisée en ce que** la pré-contrainte du ressert à lame est telle que celui-ci présente une forme ondulée avec deux crêtes en coupe longitudinale,

9. Bride de chauffage selon l'une des revendications précédentes, **caractérisée en ce que** des méplats latéraux de cadre sont formés sur le cadre, et **en ce que** l'élément d'appui en céramique est disposé entre les méplats de cadre et le côté intérieur du cadre.

10. Bride de chauffage selon la revendication 9, **caractérisée en ce que** les méplats de cadre s'étendent obliquement vers l'intérieur depuis la paroi intérieure du cadre, et **en ce que** l'élément d'appui en céramique comporte des faces frontales formées de manière complémentaire à ceux-ci.
